# EUROPÄISCHE PATENTANMELDUNG

(11) **EP 4 474 113 A1**
(43) Veröffentlichungstag der Anmeldung: **11.12.2024**
(21) Anmeldenummer: 24180361.8
(22) Anmeldetag: 06.06.2024
(51) Int. Cl.: B25J 15/00, B25J 15/04

(54) **GREIFERSYSTEM FÜR EINEN ARM EINES HANDHABUNGSROBOTERS UND HANDHABUNGSROBOTER**

(30) Priorität: 09.06.2023 DE 102023205378
(71) Anmelder: Robert Bosch GmbH, 70442 Stuttgart (DE)
(72) Erfinder: Hofele, Jens, 73230 Kirchheim Unter Teck (DE); Beigel, Jonas, 75449 Wurmberg (DE); Betzitza, Thomas, 75365 Calw (DE)

(57) **Zusammenfassung**

Die Erfindung betrifft ein Greifersystem (10) für einen Arm (1) eines Handhabungsroboters (100), mit einem Anschlussträger (12), der eine erste Schnittstelle (22) aufweist, die dazu ausgebildet ist, mit dem Arm (1) des Handhabungsroboters (100) verbunden zu werden, und mit mehreren, am Anschlussträger (12) im Bereich eines Verbindungsmoduls (25) angeordneten zweiten Schnittstellen (33), die dazu ausgebildet sind, jeweils mit einem Haltemodul (30) verbunden zu werden, wobei jedes Haltemodul (30) eine dritte Schnittstelle (46) zum Zusammenwirken mit einer zweiten Schnittstelle (33) des Verbindungsmoduls (25) und wenigstens zwei vierte Schnittstellen (48) aufweist, die dazu ausgebildet sind, mit jeweils einer dritten Schnittstelle (46) eines Haltemoduls (30) verbunden zu werden, und wobei zumindest ein Teil der Haltemodule (30), vorzugsweise alle Haltemodule (30), Greif- oder Halteelemente (35) aufweisen.

## Beschreibung

### Technisches Gebiet

Die Erfindung betrifft ein Greifersystem für einen Arm eines Handhabungsroboters, das sich durch eine besonders einfache und flexible Anpassung an unterschiedliche, handzuhabende Gegenstände auszeichnet. Ferner betrifft die Erfindung einen Handhabungsroboter, der mit einem erfindungsgemäßen Greifersystem zum Halten von Gegenständen ausgestattet ist.

### Stand der Technik

Aus der DE 10 2021 200 202 A1 der Anmelderin ist eine Greifvorrichtung für einen Roboter bekannt, die am Ende eines Roboterarms einen Greifer hat, der zum Halten von Gegenständen ausgebildet ist. Üblicherweise weisen derartige Greifer pneumatisch oder elektrisch betätigbare Greiffinger auf, oder sie sind in Form eines Vakuumsaugers ausgebildet. Derartige Greifer eignen sich insbesondere dazu, relativ einfach ausgebildete bzw. kleine Gegenstände zu fassen und diese beispielsweise unterschiedlichen Bearbeitungsstationen zuzuführen.

### Offenbarung der Erfindung

Das erfindungsgemäße Greifersystem für einen Arm eines Handhabungsroboters mit den Merkmalen des Anspruchs 1 hat den Vorteil, dass es auf besonders einfache Art und Weise an unterschiedlich geformte bzw. unterschiedliche Geometrien von handzuhabenden Gegenstände angepasst werden kann. Der Erfindung liegt die Idee zugrunde, durch ein modulartiges Baukastensystem unterschiedlich ausgebildete Anordnungen von Greif- bzw. Halteelementen bereitzustellen, damit das Greifersystem mit Blick auf eine bestimmte Geometrie oder Form der Gegenstände besonders gut und einfach angepasst werden kann. Insbesondere ermöglicht es das erfindungsgemäße Greifersystem, unter Verwendung eines Anschlussmoduls und verschieden angeordneter und gegebenenfalls verschiedene Anzahlen aufweisender Haltemodule, die mit dem Anschlussmodul verbindbar sind, das Greifersystem sehr leicht an unterschiedliche Aufgaben bzw. haltende Gegenstände anzupassen.

Vor dem Hintergrund der obigen Erläuterungen ist es daher bei einem erfindungsgemäßen Greifersystem für einen Arm eines Handhabungsroboters vorgesehen, dass dieses einen Anschlussträger umfasst, der eine erste Schnittstelle aufweist, die dazu ausgebildet ist, mit dem Arm des Handhabungsroboters verbunden zu werden. Weiterhin sind mehrere, am Anschlussträger im Bereich eines Verbindungsmoduls angeordnete zweite Schnittstellen vorgesehen, die dazu ausgebildet sind, jeweils mit einem Haltemodul verbunden zu werden, wobei jedes Haltemodul eine dritte Schnittstelle zum Zusammenwirken mit einer zweiten Schnittstelle des Verbindungsmoduls und wenigstens zwei vierte Schnittstellen aufweist, die dazu ausgebildet sind, mit jeweils einer dritten Schnittstelle eines Haltemoduls verbunden zu werden. Zumindest ein Teil der Haltemodule, vorzugsweise alle Haltemodule, weist Greif- oder Halteelemente auf, wobei das Verbindungsmodul im Bereich der zweiten Schnittstellen und die Haltemodule im Bereich ihrer Schnittstellen jeweils einen polygonen Querschnitt haben, wobei das Verbindungsmodul im Bereich der zweiten Schnittstellen und die Haltemodule im Bereich ihrer Schnittstellen in Höhe einer gemeinsamen Ebene angeordnet sind, und wobei die zweiten Schnittstellen am Verbindungsmodul und die Schnittstellen der Haltemodule an senkrecht zur gemeinsamen Ebene verlaufenden Seitenflächen angeordnet sind.

Vorteilhafte Weiterbildungen des erfindungsgemäßen Greifersystems für einen Arm eines Handhabungsroboters sind in den Unteransprüchen aufgeführt.

Je nach Art bzw. Form der handzuhabenden Gegenstände können die Greif- oder Halteelemente beispielsweise als Vakuumsauger oder als pneumatisch oder elektrisch betätigbare Greif- oder Halteelemente ausgebildet sein.

Beispielsweise lassen sich mit als Vakuumsaugern ausgebildeten Greif- oder Halteelementen sehr einfach und zweckmäßig plattenförmige Gegenstände halten, wobei die Anordnung der Haltemodule der Form der Platte angepasst ist. Insbesondere beim Handhaben beispielsweise relativ dünner Platten, die ein relativ hohes Gewicht aufweisen, wie dies bei Aluminium- oder Stahlplatten der Fall ist, lassen sich dadurch Durchbiegungen an den Platten vermeiden, die das Halten der Platten mittels des Greifersystems ansonsten negativ beeinflussen.

Um unterschiedliche Anordnungen der Haltemodule bzw. Formen des Greifersystems zu ermöglichen, ist es bevorzugt vorgesehen, dass die Querschnitte des Verbindungsmoduls und der Haltemodule jeweils quadratisch oder sechseckig ausgebildet sind und die gleiche Größe aufweisen. Dadurch lassen sich die Haltemodule einfach an andere Seiten bzw. Flächen anderer Haltemodule anordnen und insbesondere auch Lücken zwischen den Haltemodulen und somit größere Abstände zwischen den Greif- oder Halteelemente vermeiden.

Eines derartiges, aus einem Verbindungsmodul und mehreren Haltemodulen besehendes Greifersystem bildet vorzugweise eine geradlinige, kreis- oder sternförmige Anordnung aus.

Zur (mechanischen) Verbindung zwischen den einzelnen Modulen untereinander ist es bevorzugt vorgesehen, dass die Haltemodule im Bereich der dritten Schnittstellen identisch ausgebildete mechanisch/pneumatisch arbeitende Verriegelungseinheiten aufweisen.

In konstruktiv bevorzugter Ausgestaltung einer derartigen Verriegelungseinheit umfasst diese zwei Kugeln, die durch Federkraft wenigstens eines Federelements kraftbeaufschlagt sind, wobei die Kugeln dazu ausgebildet sind, zum Verbinden mit einem anderen Haltemodul oder mit dem Verbindungsmodul in Aufnahmen im Bereich der zweiten Schnittstelle des Verbindungsmoduls oder der vierten Schnittstelle des Haltemoduls einzugreifen.

Weiterhin ist es bevorzugt vorgesehen, wenn die Verriegelungseinheit zur Deaktivierung pneumatisch betätigbar ist, wobei bei einer Druckbeaufschlagung ein mit dem Federelement zusammenwirkender Stößel die Kugeln in eine Entriegelungsstellung bewegt.

Um eine weitere Anpassung des Greifersystems an unterschiedliche Gegenstände bzw. gegebenenfalls besonders empfindliche Gegenstände zu ermöglichen, kann es vorgesehen sein, dass die Haltemodule zusätzliche Anschlüsse, vorzugsweise elektrische Anschlüsse, zur Signalübertragung von Sensorelementen der Haltemodule aufweist.

Weiterhin umfasst die Erfindung auch einen Handhabungsroboter mit einem soweit beschriebenen erfindungsgemäßen Greifersystem zum Halten von Gegenständen.

Ferner umfasst die Erfindung ein Haltemodul für ein Greifersystem, insbesondere das beschriebene Greifersystem, wobei das Haltemodul eine dritte Schnittstelle zum Zusammenwirken mit einer zweiten Schnittstelle eines Verbindungsmoduls und wenigstens eine, vorzugsweise wenigstens zwei, vierte Schnittstellen aufweist, wobei die wenigstens eine vierte Schnittstelle dazu ausgebildet ist, mit jeweils einer dritten Schnittstelle eines weiteren Haltemoduls verbunden zu werden, wobei das Haltemodule ein Greif- oder Halteelemente aufweist, wobei das Haltemodul einen polygonen Querschnitt aufweist.

Weitere Vorteile, Merkmale und Einzelheiten der Erfindung ergeben sich aus der nachfolgenden Beschreibung bevorzugter Ausführungsformen der Erfindung sowie anhand der Zeichnungen.

### Kurze Beschreibung der Zeichnungen

- Fig. 1: zeigt eine perspektivische Darstellung eines Greifersystems für einen Arm eines Handhabungsroboters mit mehreren, an einem Anschlussträger angeordneten Haltemodulen,
- Fig. 2: einen Schnitt durch ein Haltemodul zur Erläuterung einer Verriegelungseinheit und
- Fig. 3a bis Fig. 3d: unterschiedliche Anordnungen von Haltemodulen an einem Anschlussträger in perspektivischer Darstellung.

### Ausführungsformen der Erfindung

Gleiche Elemente bzw. Elemente mit gleicher Funktion sind in den Figuren mit den gleichen Bezugsziffern versehen.

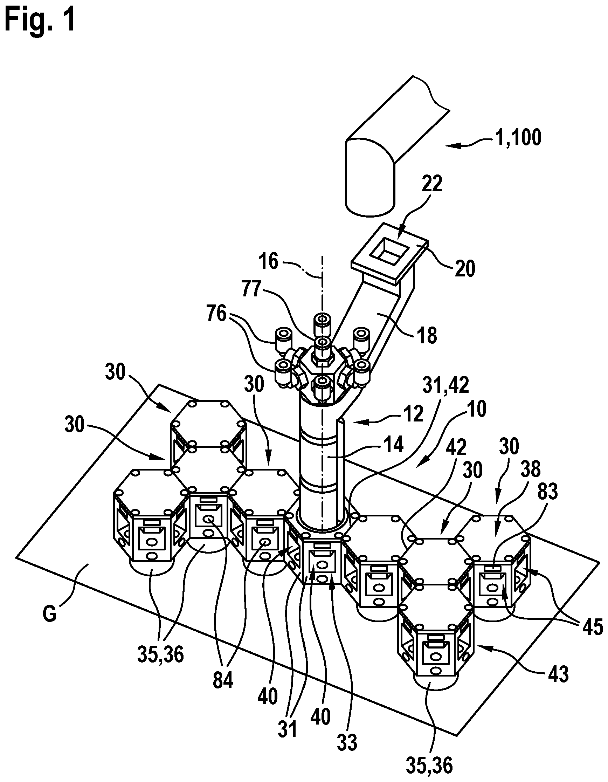

In der Fig. 1 ist ein Greifersystem 10 für einen lediglich ausschnittsweise gezeigten Arm 1 eines Handhabungsroboters 100 dargestellt. Das Greifersystem 10 dient zum Halten bzw. Handhaben von Gegenständen G, beispielsweise von Blechplatten o.ä. Gegenständen G. Die Erfindung soll jedoch auf die Handhabung von Platten als Gegenstände G beschränkt sein.

Das Greifersystem 10 weist einen Anschlussträger 12 auf, der einen säulenarten ersten Abschnitt 14 mit einer Längsachse 16 hat. Von dem ersten Abschnitt 14 ragt ein zweiter Abschnitt als Anschlussabschnitt 18 mit einer Anschlussplatte 20 seitlich ab. Die Anschlussplatte 20 bildet eine erste Schnittstelle 22 zum Verbinden des Anschlussträgers 12 mit dem Arm 1 des Handhabungsroboters 100 aus. Die Verbindung mit dem Arm 1 kann beispielsweise durch Schraubverbindungen o.ä. Verbindungselemente an der Anschlussplatte 20 erfolgen.

Der erste Abschnitt 14 des Anschlussträgers 12 weist an der dem Anschlussabschnitt 18 abgewandten Seite ein Verbindungsmodul 25 auf. Das Verbindungsmodul 25 dient der Verbindung des Anschlussträgers 12 mit wenigstens einem, vorzugsweise mit mehreren Haltemodulen 30. Das Verbindungsmodul 25 weist in einer senkrecht zur Längsachse 16 verlaufenden Ebene einen polygonen, im dargestellten Ausführungsbeispiel einen sechseckigen Querschnitt auf.

An den den Querschnitt des Verbindungsmoduls 25 begrenzenden und parallel zur Längsachse 16 verlaufenden Seitenflächen 31 bildet das Verbindungsmodul 25 jeweils eine zweite Schnittstelle 33 zur Verbindung mit den Haltemodulen 30 aus. Auch die Haltemodule 30 weisen jeweils in einer senkrecht zur Längsachse 16 verlaufenden Richtung einen polygonen bzw. sechseckigen Querschnitt auf, wobei die Haltemodule 30 identisch ausgebildet sind, und wobei die Querschnitte des Verbindungsmoduls 25 und der Haltemodule 30 gleich groß sind.

Ergänzend wird erwähnt, dass anstelle sechseckiger Querschnitte des Verbindungsmoduls 25 am Anschlussträger 12 und der Haltemodule 30 insbesondere auch dreieckförmige oder quadratische Querschnitte vorgesehen sein können.

Auf der dem Anschlussabschnitt 18 abgewandten Seite weisen die Haltemodule 30 jeweils Greif- oder Halteelemente 35 auf. Im Ausführungsbeispiel sind die Greif- oder Halteelemente 35 an jedem Haltemodul 30 jeweils in Form eines Vakuumsaugers 36 ausgebildet. Das Verbindungsmodul 25 und die Haltemodule 30 sind in Richtung der Längsachse 16 betrachtet auf einer gemeinsamen, senkrecht zur Längsachse 16 verlaufenden Ebene 38 angeordnet. Dies hat zur Folge, dass auch die Greif- oder Halteelemente 35 bzw. die Vakuumsauger 36 zu dem (ebenen) Gegenstand G, eine entsprechende Ausrichtung des Arms 1 vorausgesetzt, den gleichen Abstand aufweisen.

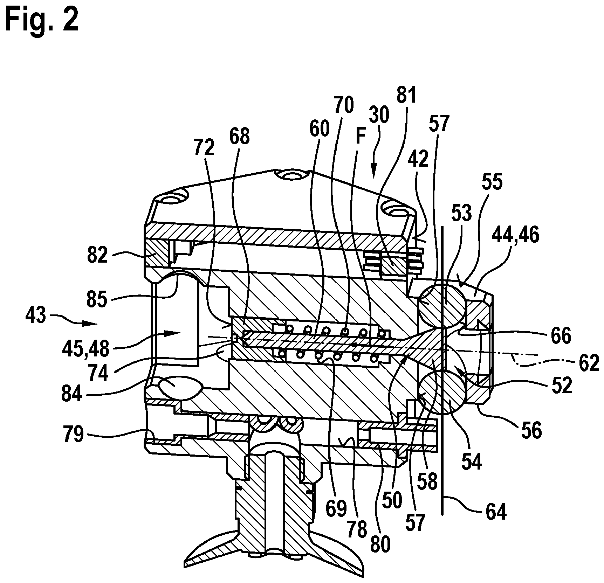

Um jeweils ein Haltemodul 30 im Bereich einer zweiten Schnittstelle 33 des Verbindungsmoduls 25 mit dem Anschlussträger 12 sowie die Haltemodule 30 untereinander verbinden zu können, weist das Verbindungsmodul 25 an seinen zweiten Schnittstellen 33 jeweils eine Aufnahmeöffnung 40, und die Haltemodule 30 im Bereich einer (einzigen) Seitenfläche 42 einen Fortsatz 44 als dritte Schnittstelle 46, sowie im Bereich der anderen (fünf) Seitenflächen 43 Aufnahmeöffnungen 45 als vierte Schnittstellen 48 auf (Fig. 2).

Die Größe bzw. Geometrie der beispielhaft rechteckförmigen Querschnitte der sacklochartigen Aufnahmeöffnungen 40 und 45 sind identisch, wobei der quaderförmig ausgebildete Fortsatz 44 formschlüssig mit einer Aufnahmeöffnung 40, 45 zusammenwirkt, derart, dass entsprechend der Fig. 1 sowohl ein Haltemodul 30 an dem Verbindungsmodul 25 des Anschlussträgers 12, als auch die Haltemodule 30 untereinander im direkten Anlagekontakt im Bereich ihrer jeweiligen Seitenflächen 31, 42 und 43 anliegen.

Die Verbindung zwischen den Haltemodulen 30 untereinander sowie zwischen einem Haltemodul 30 zu dem Verbindungsmodul 25 des Anschlussträgers 12 erfolgt jeweils durch eine im Bereich eines Haltemoduls 30 angeordnete mechanisch/pneumatische Verriegelungseinheit 50, deren Aufbau anhand der Fig. 2 erläutert wird. So weist jedes Haltemodul 30 im Bereich des Fortsatzes 44 einen Aufnahmeraum 52 auf, in dem zwei Verriegelungselemente in Form von (metallischen) Schließkugeln 53, 54 angeordnet sind. Die Schließkugeln 53, 54 ragen in der in der Fig. 2 dargestellten Verriegelungsposition der Schließkugeln 53, 54 bereichsweise aus an gegenüberliegenden Seitenflächen 55, 56 des Fortsatzes 44 ausgebildeten Durchgangsöffnungen 57 heraus. Da der Durchmesser der Durchgangsöffnungen 57 kleiner ist als der Durchmesser der Schließkugeln 53, 54, ragen die Schließkugeln 53, 54 bei Anlage an den Durchgangsöffnungen 57 mit weniger als ihrem halben Durchmesser aus den Durchgangsöffnungen 57 heraus. Dadurch wird ein Herausfallen der Schließkugeln 53, 54 aus dem Aufnahmeraum 52 verhindert.

Die Schließkugeln 53, 54 wirken mit einem kegelförmig ausgebildeten Endabschnitt 58 eines Stößels 60 zusammen, wobei der Endabschnitt 58 bereichsweise in den Aufnahmeraum 52 hineinragt. Der Stößel 60 weist eine Längsachse 62 auf, entlang derer der Stößel 60 beweglich angeordnet ist. Die beiden Schließkugeln 53, 54 sind auf einer senkrecht zur Längsachse 62 verlaufenden Geraden 64 angeordnet, und zwar zwischen der in der Fig. 2 dargestellten Verriegelungsposition der Schließkugeln 53, 54 und einer Entsperrposition, bei der die Schließkugeln 53, 54 (vollständig) in dem Aufnahmeraum 52 angeordnet sind, derart, dass diese nicht aus den Durchgangsöffnungen 57 herausragen. Zur Erzielung der Entsperrposition ist es erforderlich, dass der Endabschnitt 58 des Stößels 60 in der Zeichenebene der Fig. 2 nach rechts bewegt wird, derart, dass der Endabschnitt 58 in Anlagekontakt mit einer der Anschlagfläche 66 im Aufnahmeraum 52 gelangt. Dadurch können sich die Schließkugeln 53, 54 entlang der kegelförmigen Endabschnitts 58 in Richtung zur Längsachse 62 bzw. in den Aufnahmeraum 52 hinein bewegen.

Der Stößel 60 ist an seiner dem Endabschnitt 58 abgewandten Seite mit einem Kolben 68 verbunden, der in einer fluchtend zur Längsachse 62 verlaufenden Bohrung 69 längsverschiebbar angeordnet ist. An der dem Stößel 60 zugewandten Seite des Kolbens 68 stützt sich eine Druckfeder 70 ab, deren gegenüberliegendes Ende wiederum in Anlagekontakt zu einem Grund der Bohrung 69 angeordnet ist. Dadurch wird von der Druckfeder 70 eine in der Zeichenebene der Fig. 2 nach links wirkende Federkraft F erzeugt, die den Endabschnitt 58 des Stößels 60 und somit auch die Schließkugeln 53, 54 in die dargestellte Verriegelungsposition drückt.

Zur Erzielung der oben erwähnten Entsperrposition der Schließkugeln 53, 54 ist eine Druckfläche 72 am Kolben 68 auf der der Druckfeder 70 abgewandten Seite angeordnet. Die Druckfläche 72 ist über eine in der Fig. 2 teilweise erkennbare Versorgungsbohrung 74 mit Druckluft beaufschlagbar. Die Druckluftversorgung zu den Haltemodulen 30 erfolgt über das Anschlussträger 12, der hierzu nahe des Anschlussabschnitts 18 für jede der Seitenflächen 31 des Verbindungsmoduls 25 einen Pneumatikanschluss 76 aufweist, sodass alle, mit der jeweiligen Seitenfläche 31 direkt oder indirekt verbundenen Haltemodule 30 mit Druckluft zur Erzielung der Entsperrpositionen versorgt werden können. Ein weiterer, zentral angeordneter Pneumatikanschluss 77 dient der Versorgung des Anschlussträgers 12 mit Druckluft bzw. Unterdruck.

Über die Pneumatikanschlüsse 76 kann auch die Versorgung der Vakuumsauger 36 an den einzelnen Haltemodulen 30 mit Unterdruck erfolgen. Diese weisen hierzu in einer Ebene unterhalb des Fortsatzes 44 eine parallel zur Längsachse 62 verlaufende Längsbohrung 78 mit einem buchsenartigen Öffnung 79 auf einer Seite und einem Stutzen 80 auf der gegenüberliegende Seite zur Versorgung der Vakuumsauger 36 der miteinander gekoppelten Haltemodule 30 mit Unterdruck auf.

Auf der gegenüberliegenden Seite der Längsbohrung 78 weist jedes Haltemodul 30 weiterhin an gegenüberliegenden Seitenflächen 42, 43 einen elektrischen Anschlussstecker 81 sowie einen Anschlussbuchse 82 auf. Dadurch können ggf. im Bereich der Haltemodule 30 angeordnete Aggregate oder Sensoren mit Spannung versorgt werden. Die Spannungsversorgung erfolgt vorzugsweise ebenfalls über das Anschlussträger 12 über im Bereich der Seitenflächen 31 angeordnete Anschlussbuchsen 83 (Fig. 1).

Um die Haltemodule 30 untereinander bzw. ein Haltemodul 30 mit dem Anschlussträger 12 mechanisch zu verbinden, wird ein Fortsatz 44 eines Haltemoduls 30 in eine Aufnahmeöffnung 40 bzw. 44 eingeschoben. Dabei werden die Schließkugeln 53, 54 in die Durchgangsöffnungen 57 entgegen der Federkraft F der Druckfeder 70 eingedrückt, bis diese in den Bereich von in den Aufnahmeöffnungen 40, 44 ausgebildeten, kugelabschnittsförmigen Aufnahmen 84, 85 gelangen. Dort werden die Schließkugeln 53, 54 durch die Federkraft F wieder aus den Durchgangsöffnungen 57 herausgedrückt und bilden eine form- und kraftschlüssige Verbindung mit den Aufnahmen 84, 85 aus. Um die Verbindung wieder zu lösen, werden die Druckflächen 72 mit Druckluft beaufschlagt.

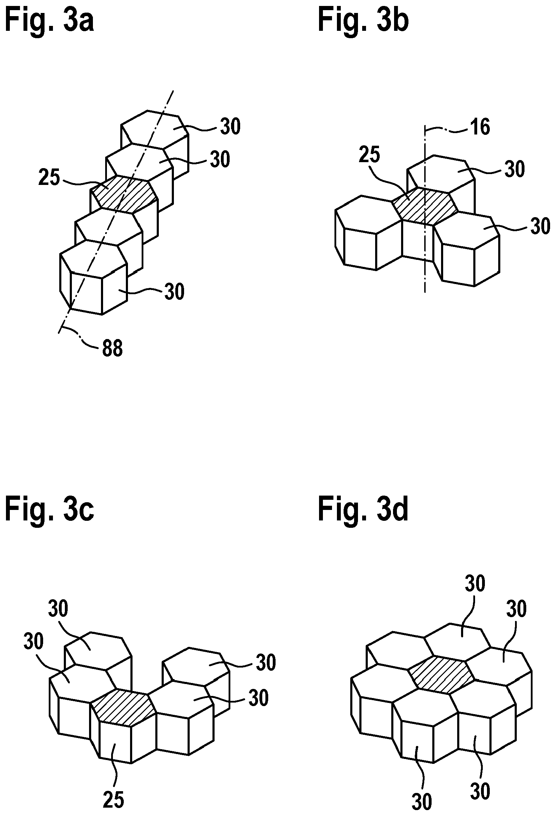

Das soweit beschriebene Greifersystem 10 lässt sich zur Anpassung an die Form bzw. Geometrie und/oder Gewicht von Gegenständen G in unterschiedlichster Art und Weise zusammenstellen bzw. konfigurieren, wie dies rein beispielhaft und schematisch anhand der Fig. 3a bis 3d dargestellt ist. So ist in der Fig. 3a der Fall dargestellt, bei dem beidseitig des Verbindungsmoduls 25 jeweils zwei Haltemodule 30 angeordnet sind, die sich entlang einer gemeinsamen Hauptachse 88 erstrecken. In der Fig. 3b ist der Fall dargestellt, dass drei Haltemodule 30 in gleichmäßigen Winkelabständen um die Längsachse 16 des Anschlussträgers 12 bzw. Verbindungsmoduls 25 angeordnet sind, sodass insgesamt eine sternförmige Anordnung geschaffen wird. In der Fig. 3c ist der Fall dargestellt, bei der insgesamt vier Haltemodule 30 mit dem Verbindungsmodul 25 am Anschlussträger 12 verbunden sind, wobei die Haltemodule 30 eine in etwa halbkreisförmige Anordnung zusammen mit dem Verbindungsmodul 25 ausbilden. Zuletzt ist in der Fig. 3d der Fall dargestellt, bei der insgesamt sechs Haltemodule 30 das Verbindungsmodul 25 umgeben. Dadurch wird eine kreisförmige Anordnung der Haltemodule 30 geschaffen.

Das soweit beschriebene Greifersystem 10 kann in vielfältiger Art und Weise abgewandelt bzw. modifiziert werden, ohne vom Erfindungsgedanken abzuweichen. So ist es beispielsweise denkbar, dass nicht alle Haltemodule 30 Greif- oder Halteelemente 35 bzw. Vakuumsauger 36 aufweisen müssen. Auch können die Greif- oder Halteelemente 35 zum Beispiel als pneumatisch oder elektrisch betätigbare Greiffinger ausgebildet sein.

## Patentansprüche

1. Greifersystem (10) für einen Arm (1) eines Handhabungsroboters (100), mit einem Anschlussträger (12), der eine erste Schnittstelle (22) aufweist, die dazu ausgebildet ist, mit dem Arm (1) des Handhabungsroboters (100) verbunden zu werden, und mit mehreren, am Anschlussträger (12) im Bereich eines Verbindungsmoduls (25) angeordneten zweiten Schnittstellen (33), die dazu ausgebildet sind, jeweils mit einem Haltemodul (30) verbunden zu werden, wobei jedes Haltemodul (30) eine dritte Schnittstelle (46) zum Zusammenwirken mit einer zweiten Schnittstelle (33) des Verbindungsmoduls (25) und wenigstens zwei vierte Schnittstellen (48) aufweist, die dazu ausgebildet sind, mit jeweils einer dritten Schnittstelle (46) eines Haltemoduls (30) verbunden zu werden, wobei zumindest ein Teil der Haltemodule (30), vorzugsweise alle Haltemodule (30), Greif- oder Halteelemente (35) aufweisen, wobei das Verbindungsmodul (25) im Bereich der zweiten Schnittstellen (33) und die Haltemodule (30) im Bereich der Schnittstellen (33, 46, 48) jeweils einen polygonen Querschnitt aufweisen, wobei das Verbindungsmodul (25) im Bereich der zweiten Schnittstellen (33) und die Haltemodule (30) im Bereich ihrer Schnittstellen (46, 48) in Höhe einer gemeinsamen Ebene (38) angeordnet sind, und wobei die zweiten Schnittstellen (33) am Verbindungsmodul (25) und die Schnittstellen (46, 48) der Haltemodule (30) an senkrecht zur gemeinsamen Ebene (38) verlaufenden Seitenflächen (31, 42, 43) angeordnet sind.

2. Greifersystem nach Anspruch 1,
**dadurch gekennzeichnet,**
**dass** die Greif- oder Halteelemente (35) als pneumatisch oder elektrisch betätigbare Greif- oder Halteelemente (35), insbesondere als Vakuumsauger (36), ausgebildet sind.

3. Greifersystem nach Anspruch 1 oder 2,
**dadurch gekennzeichnet,**
**dass** die Querschnitte des Verbindungsmoduls (25) und der Haltemodule (30) jeweils quadratisch oder sechseckig ausgebildet und die gleiche Größe aufweisen.

4. Greifersystem nach einem der Ansprüche 1 bis 3,
**dadurch gekennzeichnet,**
**dass** das Verbindungsmodul (25) zusammen mit den Haltemodulen (30) eine geradlinige, kreis- oder sternförmige Anordnung ausbilden.

5. Greifersystem nach einem der Ansprüche 1 bis 4,
**dadurch gekennzeichnet,**
**dass** die Haltemodule (30) im Bereich ihrer dritten Schnittstellen (46) identisch ausgebildete mechanisch/pneumatisch arbeitende Verriegelungseinheiten (50) aufweisen.

6. Greifersystem nach Anspruch 5,
**dadurch gekennzeichnet,**
**dass** die Verriegelungseinheit (50) zwei Kugeln (53, 54) umfasst, die durch Federkraft (F) wenigstens eines Federelements (70) kraftbeaufschlagt sind, und dass die Kugeln (53, 54) dazu ausgebildet sind, zum Verbinden mit einem anderen Haltemodul (30) oder mit dem Verbindungsmodul (25) in Aufnahmen (84, 85) im Bereich der zweiten Schnittstelle (33) des Verbindungsmoduls (25) oder der vierten Schnittstelle (48) des Haltemoduls (30) einzugreifen.

7. Greifersystem nach Anspruch 5 oder 6,
**dadurch gekennzeichnet,**
**dass** die Verriegelungseinheit (50) zur Deaktivierung pneumatisch betätigbar ist, wobei bei einer Druckbeaufschlagung ein mit dem Federelement (70) zusammenwirkender Stößel (60) die Kugeln (53, 54) in eine Entriegelungsstellung bewegt.

8. Greifersystem nach einem der Ansprüche 1 bis 7,
**dadurch gekennzeichnet,**
**dass** die Haltemodule (30) zusätzliche Anschlüsse (81, 82), vorzugsweise elektrische Anschlüsse (81, 82), zur Signalübertragung von Sensorelementen der Haltemodule (30), aufweist.

9. Greifersystem nach einem der Ansprüche 1 bis 8,
**dadurch gekennzeichnet,**
**dass** die Haltemodule (30) identisch ausgebildet sind.

10. Handhabungsroboter (100), mit einem Greifersystem (10) zum Halten von Gegenständen (G), das nach einem der Ansprüche 1 bis 9 ausgebildet ist.

11. Haltemodul (30) für ein Greifersystem (10), insbesondere ein Greifersystem (10) nach einem der Ansprüche 1 bis 9, wobei das Haltemodul (30) eine dritte Schnittstelle (46) zum Zusammenwirken mit einer zweiten Schnittstelle (33) eines Verbindungsmoduls (25) und wenigstens eine, vorzugsweise wenigstens zwei, vierte Schnittstellen (48) aufweist, wobei die wenigstens eine vierte Schnittstelle (48) dazu ausgebildet ist, mit jeweils einer dritten Schnittstelle (46) eines weiteren Haltemoduls (30) verbunden zu werden, wobei das Haltemodule (30) ein Greif- oder Halteelemente (35) aufweist, wobei das Haltemodul (30) einen polygonen Querschnitt aufweist.
